# EUROPEAN PATENT APPLICATION

(11) **EP 2 062 474 A1**
(43) Date of publication of application: **27.05.2009**
(21) Application number: 07121289.8
(22) Date of filing: 22.11.2007
(51) Int. Cl.: A01G 5/00, A01G 7/00, A01H 1/02

(54) **Device for separation and removal of parts of flowers**

(71) Applicant: Peters, Lee-Anne, Hertford, Hertfordshire SG14 3TD (GB)
(72) Inventor: Peters, Lee-Anne, Hertford, Hertfordshire SG14 3TD (GB)
(74) Representative: W.P. Thompson & Co.

(57) **Abstract**

The device comprises two hollow parts 10, 12 joined by a living hinge 14. The parts have edges 20, 22 which cut an anther from its filament when the device is closed around the stamen of a flower. After separation, the anther is contained within the device, whereby it is moved away for disposal. The problem of staining by anthers falling from the plants, particularly lilies, is thus avoided.

## Description

This invention relates to the separation and removal of parts of flowers.

Certain cut flowers and flowers of flowering plants present a problem when displayed indoors, this being that parts of the flowers, particularly the pollen-bearing anther of the stamen of the flower, can fall from the flowers and, as a result of their pigmented contents, cause staining of adjacent items such as carpets, curtains, tablecloths, clothing, and furniture. The problem arises particularly in the case of lilies.

The present invention seeks to overcome this problem by providing a device for the convenient removal and disposal of such flower parts.

The invention provides a device for separation and removal of a part of a flower, comprising first and second elongate parts hinged together adjacent their shorter ends by hinge means and narrowing towards their opposite ends to provide a tapered nose portion for presentation to a flower part to be removed, wherein at least one of the device parts has an internal cavity formed therein to receive a separated flower part, the hinge means allows relative movement of the first and second parts between an open condition and a closed condition, edge portions of the parts cooperating on approach to the closed condition to provide for separation of a flower part from the remainder of a plant and the parts cooperating in the closed condition to close the internal cavity, whereby the separated flower part may be retained within the cavity for removal from the vicinity of the plant.

Preferably, the first and second parts from a substantially continuous outer surface in the closed condition.

Conveniently, the internal cavity is formed partially in one part and partially in the other.

Advantageously, edge portions of the parts are shaped to form cutting edge.

Conveniently, the device is formed in one piece from moulded plastics material, the hinge being a living hinge moulded integrally with the first and second parts.

Preferably, the device is substantially symmetrical about the plane of joining of the parts in the closed condition of the device.

The length of the device is preferably from 4 cm to 8 cm; the device preferably has a maximum width which is from about 50% to about 70% of the length of the device.

An embodiment of the invention will now be described by way of example with reference to the drawing, in which:
Figure 1 is a plan view of an anther-removal device in its closed condition;
Figure 2 is a end view of the device of figure 1, viewed in the direction "A" shown by an arrow in figure 1;
Figure 3 is a side view of the device of figure 1, viewed in the direction "C" shown by an arrow in figure 1;
Figure 4 is a side view of the device of figure 1 in its open condition; and
Figure 5 is a section on the line V-V shown in figure 3.

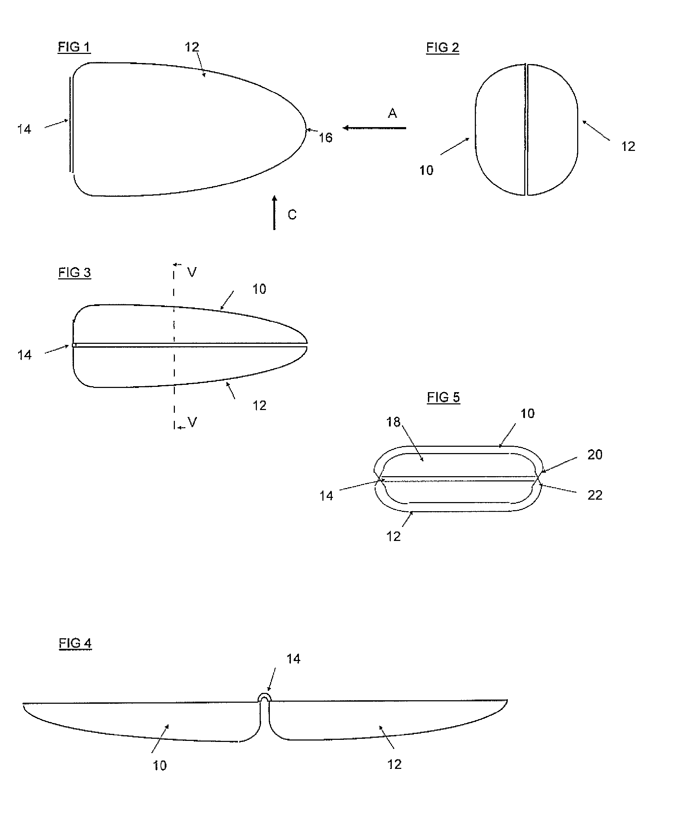

Referring to the drawings, these show that the device consists of two identical hollow parts 10,12 which are joined by a living hinge 14. The parts 10,12 and the hinge 14 are formed in one piece as a moulding of a suitable plastics material. Alternatively, the parts could be made from metal or another suitable material, either wholly or in part. The parts of the device are movable between the positions shown in figures 1 and 4, respectively, these representing the closed and open conditions of the device, respectively. The device preferably has a slight resilient bias towards the open condition.

As can be seen in figure 1, the device has a shape in plan which is akin to an elongated letter "D" with the hinge 14 situated along the straight edge which forms one of the shorter ends of the device. The sides of the device narrow along curved lines to a nose portion 16 at the opposite end of the device.

The hollow parts form an internal cavity 18 which is closed in the closed condition of the device shown in figures 1 to 3 and 5 and open in the open condition shown in figure 4.

The walls of the device parts 10, 12 taper in thickness towards the free edges of the walls to form respective acute-angled edge portions 20, 22, as can be best seen from figure 5 of the drawings.

The dimensions of the device are as follows in this embodiment: overall length - 5.5 cm; maximum width - 3.5 cm; maximum height - 2.5 cm; wall thickness - 2 mm. The device can then conveniently be held and manipulated between thumb and forefinger.

The use of the device to remove the troublesome anthers from the flower of a lily will now be described. The flower has a number of stamen which each include a pollen-bearing anther and a filament, by which the anther is connected to the remainder of the flower. The device is held between thumb and forefinger with its parts 10, 12 sufficiently open to form an angle of about 30° therebetween. The device is presented thus to a lily flower and positioned so that one of the anthers of the flower lies between the device parts. The parts are now closed around the anther and, in so doing, the edge portions 20, 22 cut the filament to cause separation of the anther from the filament. The anther can now be removed from the vicinity of the flower and disposed of in a way which avoids any problem of unwanted staining caused by the pollen content of the anther. If desired, the device may be used successively to remove a plurality of anthers from one or more flowers, before disposal of the accumulated anthers in a single operation.

It should be noted that the device of the inventor can be used not only for removal of anthers from filaments but also for the removal of other flower parts, for example the stigma from the style which constitute the pistil of the flower.

## Claims

1. A device for separation and removal of a part of a flower, comprising first and second elongate parts hinged together adjacent their shorter ends by hinge means and narrowing towards their opposite ends to provide a tapered nose portion for presentation to a flower part to be removed, wherein at least one of the device parts has an internal cavity formed therein to receive a separated flower part, the hinge means allows relative movement of the first and second parts between an open condition and a closed condition, edge portions of the parts are shaped to form a cutting edge and cooperate on approach to the closed condition to provide for separation of a flower part from the remainder of a plant, and the parts cooperate in the closed condition to close the internal cavity, whereby the separated flower part may be retained within the cavity for removal from the vicinity of the plant.

2. A device according to claim 1, in which the first and second parts from a substantially continuous outer surface in the closed condition.

3. A device according to claim 1 or 2, in which the internal cavity is formed partially in one part and partially in the other.

4. A device according to any preceding claim, formed in one piece from moulded plastics material, the hinge being a living hinge moulded integrally with the first and second parts.

5. A device according to any preceding claim, which is substantially symmetrical about the plane of joining of the parts in the closed condition of the device.
